Europäisches Patentamt

European Patent Office

Office européen des brevets

(19)

(11) **EP 1 327 492 A1**

(12) ## EUROPEAN PATENT APPLICATION

(43) Date of publication:
**16.07.2003 Bulletin 2003/29**

(51) Int Cl.[7]: **B22F 7/00**, H01M 8/02

(21) Application number: **02075170.7**

(22) Date of filing: **15.01.2002**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **N.V. BEKAERT S.A.**<br>**8550 Zwevegem (BE)** | (72) Inventors:<br>• **Anaf, Lieven**<br>  **8790 Waregem (BE)**<br>• **Losfeld, Ronny**<br>  **8790 Waregem (BE)** |

(54) **Porous metal stack for fuel cells or electrolysers**

(57)    A stack to be used in a fuel cell or an electrolyser, comprises an impermeable metal structure, at least one first metal fiber layer and at least one second metal fiber layer. The impermeable metal structure is sintered to one side of said first metal fibers layer and the second metal fibers layer is sintered to the other side of said first metal fibers layer. A planar air permeability of said stack of more than 0.02 l/min*cm is provided, whereas the porosity of said second metal fiber layer being less than 80%.

Fig. 1

Printed by Jouve, 75001 PARIS (FR)

EP 1 327 492 A1

**Description**

**Field of the invention.**

The present invention relates to a porous stack comprising metal fibers, to be used in fuel cells or electrolysers.

**Background of the invention.**

Fuel cells and electrolysers usually comprise a number of stacks, which are added in combination with a proton exchange membrane (PEM), in order to obtain separated cells for the electrochemical reactions in either the fuel cell or electrolyser. Such stacks are generally known in the art. They usually have at least 3 layers, engaging each other closely.

A first layer is a water- and gas-proof layer, hereafter referred to as "collector layer", and also referred to in the art as "bipolar plate". This collector layer avoids gas or water leakage from one cell to an other, and guides electrons (e-) to or from the cell. Therefor it is generally known to use a conductive plate, usually a graphite plate.

A second layer, engaging closely one side of the collector layer, is used to distribute the gasses, used or provided by the electrochemical reaction in the fuel cell or electrolyser at the proton exchange membrane (PEM), over the whole surface of the fuel cell or electrolyser. This layer is hereafter referred to as "distribution layer".

A third layer, engaging closely the other side of the collector layer, is a layer, used to provide the contact between diffusion layer and PEM. At this so-called contact layer or "electrode layer", the electrochemical reaction takes place, due to the presence of catalytic elements, either on the contact layer or the PEM itself. Gasses, being provided via the diffusion layer to this contact layer, are to be retained sufficiently to enable the electrochemical reaction to take place.

The contact layer, and possibly also the diffusion layer, may be made hydrophobic, e.g. by impregnation or presence of hydrophobic elements such as Teflon®, or hydrophilic.

Depending on the place of the stack in the fuel cell or the electrolyser, a electrochemical reaction takes place in which e-, protons ($H^+$) and a gas are consumed or provided near a PEM.

The $H^+$ are provided or evacuated via the PEM to the electrochemical reaction. Therefor, the contact between contact layer and PEM is to be as perfect as possible, since the electrochemical reaction takes place at the catalytic layer, which is close to the surface of the PEM.

The e- are provided or evacuated via the stack of collector layer, diffusion layer and contact layer. Therefor, all layers engaged are to be electro-conductive, and the resistance over the stack, and especially the contact resistance at the contacts of the several layers is to be as low as possible.

The diffusion layer is to spread the gas flow as much as possible over the whole surface of the contact layer, in order to use the present catalytic elements as complete as possible, providing e- and $H^+$ over the whole surface of the PEM.

An example of a stack is described in WO0069003 and EP0141241.

**Summary of the invention.**

The present invention has as an object to provide an improved stack for use in fuel cells or electrolysers, which comprises metal fibers and which has a reduced electrical resistance over its thickness, an improved property of diffusing the reaction gasses over the surface of the PEM, against which it is to be used, and an improved contact between stack and PEM.

A stack as subject of the invention comprises at least three layers:

- At least one gas- and liquid impermeable metal structure ( collector layer), such as a metal foil or metal plate;
- At least one first metal fiber layer (diffusion layer), comprising metal fibers;
- At least one second metal fibers layer (contact layer), comprising metal fibers.

According to the present invention, the impermeable structure is sintered to one side of the diffusion layer, and the second metal fiber layer is sintered to the other side of the diffusion layer. The term layer is to be understood as an essentially flat object having a thickness, which is essentially equal over the surface of the object. The properties of both metal fiber layers are chosen in such a way that the planar air permeability of the stack as subject of the invention is more than 0.02 l/min*cm, whereas the porosity of the contact layer is less than 80% or even less than 75%.

A stack as subject of the invention may comprise

- a gas- and liquid impermeable metal structure ( collector layer), such as a metal foil or metal plate;
- two first metal fiber layers (diffusion layers), comprising metal fibers;
- two second metal fiber layers (contact layers), comprising metal fibers

It is understood that at both sides of the impermeable metal structure, a first metal fiber layer is sintered, and that a second metal fibers layer is sintered to each of the sides of the first metal fibers layers, which are not connected to the impermeable metal structure. The planar air permeability of the stack as subject of the invention at both sides of the impermeable metal structure is more than 0.02 l/min*cm, whereas the porosity of the contact layers are less than 80% or even less than 75%.

With planar air permeability is meant the amount of gas which is passed through the metal fibers layers of the stack in a direction parallel to the plane of the layers. This planar air permeability is measured by taking a rectangular part of the stack, having a height of 2.5cm. this side is hereafter referred to as short side. The other side of the rectangular sample is referred to as long side. This rectangle is clamped between two seals of equal dimension, in such a way that the sides of the sample and the sides of the seals coincide. Air is sucked using an underpressure of 200Pa at the long side of the rectangular sample over a length of 5 cm. The non-used length of the long side via which is sucked is sealed. The volume of air sucked is measured, and the permeability is expressed in l/min*cm, for which cm is the unity of length of the sample. Preferably, a length of 5 cm of the long side is used.

The "porosity" of a layer is expressed as

$$\text{Porosity} = 100 - \text{Density}.$$

With "density" is meant 100 times the ratio of the weight per volume of the layer over the weight of an identical volume which exists for 100% of the metal alloy of which the metal fibers are provided.. The density is expressed in percentage.

Preferably the impermeable metal structure is a metal foil or metal plate, most preferably provided out of stainless steel, Ni, Ni-alloys, e.g. Inconel®. or Ti. In case of stainless steel, preferably Fe-Ni-Cr alloys are used such as alloys of the series AISI-300, preferably AISI 316L or Fe-Cr alloys such as alloys of the series AISI-400.

The metal fibers used to provide the metal fibers layers are preferably stainless steel fibers, Ni- or Ni alloy fibers or Ti-fibers. In case of stainless steel fibers, preferably Fe-Ni-Cr alloys are used such as alloys of the series AISI-300, preferably AISI 316L or Fe-Cr alloys such as alloys of the series AISI-400. The metal fibers may be obtained by using presently known techniques, such as bundle drawing, coil shaving or any other production technique.

Preferably all layers of the stack are provided out of the same metal or metal alloy.

The contact layer and the diffusion layer may be sintered separately, before a stack, comprising a collector layer, one or more diffusion layers and one or more contact layers, is assembled and the layers are sintered to each other. Alternatively, the diffusion layers and the contact layers, both comprising metal fibers, and the collector layer may be sintered to each other all at once during one sintering operation, either batch or continuous sintering.

The equivalent diameter of the metal fibers used to provide the first metal fiber layer or layers, so-called diffusion layer, is larger than 20μm, most preferably larger than 50μm. Possibly, more than one sheet of metal fibers is used to provide the first metal fibers layer or layers.

With "equivalent diameter of a metal fiber" is meant the diameter of an imaginary circle which has the same surface as a cross-section of the metal fiber.

Preferably, the porosity of the diffusion layer is more than 10% larger than the porosity of the contact layer. Most preferably, the porosity of the diffusion layer is more than 80%, or even more than 82%, such as more than 85% or even more than 90%. In order to obtain a preferred stack as subject of the invention, the thickness of the diffusion layer is more than 0.5mm, most preferably more than 1mm.

Such diffusion layers provide to the largest extend the planar air permeability to the stack, and hence a superior distribution of the reaction gas over the whole surface of the adjacent contact layer or layers.

Alternatively, but also according to the present invention, a metal mesh or stretch metal foil or plate, or a layer of foamed metal may be inserted between two sheets of metal fibers, comprised in this first metal fibers layer.

The equivalent diameter of the metal fibers used to provide the second metal fibers layer, so-called contact layer, is smaller than 30μm, most preferably smaller than 10μm. Possibly, more than one sheet of metal fibers is used to provide the second metal fibers layer.

The thickness of the contact layer is preferably less than 0.2mm.

Such contact layers, obtaining reaction gas via the diffusion layer over its whole surface, retains the gas sufficiently to propagate the electrochemical reaction at its reactive side, being the side of the contact layer, which contacts the adjacent PEM. Since the perpendicular air permeability of the second metal fiber layer is relatively low, a too quick consumption of reaction gas at the gas entrance of the stack is prevented, which results also in a presence of reactive gas over the whole surface of the connection layer. Possibly, the side of the contact layer, which contacts the PEM, is provided with an appropriate catalyst. Alternatively the catalyst is present on the surface of the PEM. Due to the small equivalent diameter of the metal fibers used to provide the contact layer, and the density of this layer, a very high degree of contact between contact layer and PEM may be obtained, whereas the side of the layer contacting the PEM, is relatively soft. Metal fibers projecting out of the essentially flat surface of the contact layer, will not penetrate through the PEM when used, but will bend to the contact layer surface during assembly and use of the fuel cell or electrolyser.

Preferably, the perpendicular air permeability of the contact layer is less than 200 l/min*dm$^2$, most preferably even less than 150 l/min*dm$^2$.

With perpendicular air permeability is meant the amount of gas which is passed through the metal fibers layer in a direction perpendicular to the plane of the layer, measured using an underpressure of 200Pa, and measured using methods known in the art, such as a Textest FX3300. The perpendicular air permeability is expressed in $l/min*dm^2$.

Further, the obtained stack as subject of the invention preferably has a transversal electrical resistance of less than $30*10^{-3}$ Ohm or even less than $15*10^{-3}$ Ohm, in case a stack of an impermeable metal structure, a diffusion layer and a contact layer is provided. With transversal resistance is meant the electrical resistance measured between a point on the surface of the impermeable metal structure and the point of the side of the connecting layer to be used against the PEM, which point is closest to the point of the impermeable metal structure. This low resistance is obtained thanks to the many contact points between several fibers being sintered to each other or to the collector layer. Alternatively, when at each side of the impermeable metal structure a diffusion layer and a connection layer is provided, the transversal electric resistance is preferably less than $30*10^{-3}$ Ohm.

After sintering, possibly, but not necessarily, the metal fiber layers may be impregnated with a hydrophobic or hydrophilic agent, e.g. polytertrafluoethylene such as Teflon® as hydrophobic agent.

Such stacks may be used in fuel cell, where at least two stacks as subject of the invention are used. Between a contact layer of the first stack and a contact layer of a second stack, a PEM is provided. At both sides of the PEM, necessary catalysts are present to propagate the electrochemical reaction wanted. To the diffusion layer of the first stack, $H_2$ is provided, which flows through the whole diffusion layer (due to the relatively high planar air permeability of the stack). At the PEM, a reaction as underneath is propagated:

$$H_2 \rightarrow 2 H^+ + 2 e^-$$

This side of the fuel cell is referred to as anode. H+ is conducted through the PEM to the opposite side of the PEM, whereas the $e^-$ is drained away through the electrically conductive connection and diffusion layer to the impermeable metal structure.

The e- is guided via an electrical circuit to the other impermeable metal structure of the second stack. Again via the diffusion and connection layer of this second stack, the $e^-$ are provided to the electrochemical reaction at this side of the PEM, being the cathode side.

$O_2$ is provided to the diffusion layer of this second stack, which is conducted through the connection layer to the surface of the PEM. Here a reaction takes place, using $O_2$, $e^-$ and $H^+$ (provided through the PEM):

$$O_2 + 4 H^+ + 4 e^- \rightarrow 2H_2O$$

Since the optimal planar air permeability of the stack, and the relatively low perpendicular air permeability of the contact layers, the gasses are spread in an optimal way over the whole PEM surface. Further, since the low electrical transversal resistance of the stacks, the e- are conducted to the electrical circuit without a significant loss of power.

A similar benefit is made when the stacks are used in electrolysers. An identical combination of at least two stacks is provided. A determined electrical tension is provided between the two impermeable metal structures. At the stack with a positive electrical tension on its impermeable metal structure, $H_2O$ is provided, which reacts at the PEM surface as:

$$2H_2O \rightarrow O2 + 4 H^+ + 4 e^-$$

The $H^+$ is conducted through the PEM to the other side of the PEM, whereas the $e^-$ is conducted via the metal fiber layers to the impermeable metal structure. $O_2$ is easily evacuated since the high planar air permeability of the diffusion layer.

At the other side, a reaction takes place:

$$2 H^+ + 2 e^- \rightarrow H2,$$

Where $H^+$ is provided via the PEM and the e- are provided via the impermeable metal structure (being negative pole) and the metal fiber layers. $H_2$ is easily evacuated due to the high planar air permeability of the diffusion layer.

## Brief description of the drawings.

The invention will now be described into more detail with reference to the accompanying drawings wherein

- FIGURE 1 shows schematically a stack as subject of the invention;
- FIGURE 2 shows schematically another stack as subject of the invention;
- FIGURE 3a, FIGURE 3b and FIGURE 3c show schematically a test set up to measure the planar air permeability of a stack;
- FIGURE 4 shows schematically a fuel cell as subject of the invention;
- FIGURE 5 shows schematically an electrolyser as subject of the invention.

## Description of the preferred embodiments of the invention.

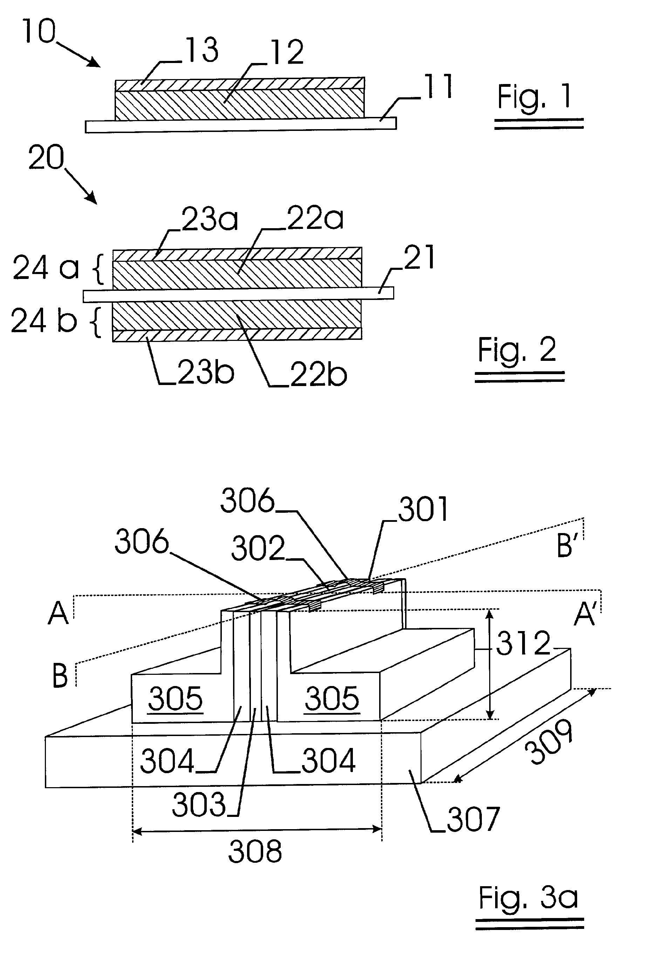

An embodiment of a porous stack as subject of the invention is shown in Figure 1.

The stack 10 comprises a gas- and liquid impermeable metal structure, so-called collector layer 11. In the embodiment shown in Figure 1, a metal plate provided out of stainless steel with alloy AISI 316L is used. The collector layer has a thickness of 0,4 mm.

To one side of this collector layer, a diffusion layer 12, being a sintered metal fiber layer consisting out of stainless steel fibers (Alloy AISI 316L) with equivalent diameter of 22 μm is provided. This diffusion layer 12 has a thickness of 1,7mm and has a porosity of 90%.

The fibers are preferably, but not necessarily obtained by coil shaving process, which provides to the fibers a substantially rectangular cross-section, have a large side of approximately 25 μm and a short side of approximately 15 μm

To the side of the diffusion layer, which does not contact the collector layer, a second metal fiber layer 13, being the contact layer, is provided.

This contact layer 13 consists of sintered bundle drawn stainless steel fibers (Alloy AISI 136L) having an essentially circular cross-section with an equivalent diameter of 8 μm. This contact layer 13 has a thickness of approximately 0,2 mm and a porosity of preferably 70%.

An alternative stack 20 as subject of the invention is shown in Figure 2. This embodiment comprises a collector layer 21, being identical to the collector layer of Figure 1.

At both sides of the collector layer 21, a diffusion layer 22a and 22b is provided, each diffusion layer 22a and 22b being identical as the diffusion layer of Figure 1.

Similar as in Figure 1, a contact layer 23a and 23b is provided to the sides of diffusion layer 22a and 22b. These contact layers 23a and 23b are identical to the contact layer of Figure 1.

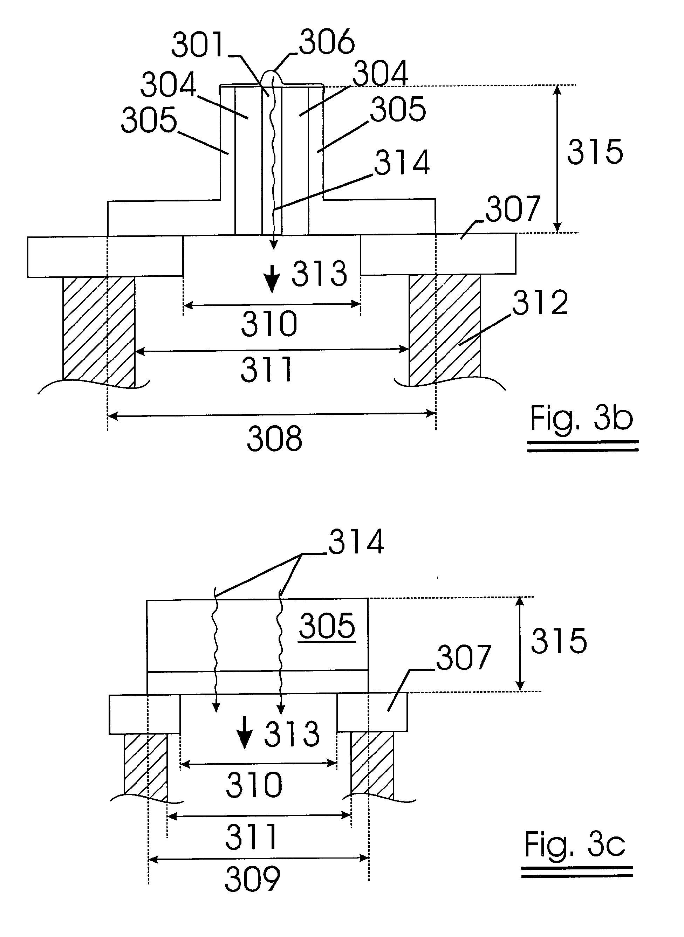

The planar air permeability of stack 10, and of both sides 24a and 24b of stack 20, are measured as shown in FIGURE 3a, FIGURE 3b and FIGURE 3c. As shown in FIGURE 3a, a rectangular sample (301) of a stack, having a long side 302 and a short side 303 is clamped between two seals 304 by means of two clamps 305. The sealant material of seal 304 is preferably a HD PE-foam, having a thickness of approximately 10mm when not pressed. The clamps 305 are preferably made out of metal. All parts are kept together by closing means 306, e.g. a clip.

This assembly is placed on a sealant 307, which is provided with a hole with diameter 310 (see figure 3b and 3c), located underneath the long side 302. The dimension 308 and 309 of the assembly is at least 2 cm larger than the diameter 310 of the hole.

The height 315 of the short side 303 is taken 2.5cm. In a section according to AA' in FIGURE 3b, and in the section according to BB' in FIGURE 3c, it is shown that the assembly is placed over the opening of a sucking device 312, e.g. a Textest FX3300, having a suction opening with a diameter 311, which is at least equal to the diameter of the opening in the sealant 307, but which is smaller than the dimension 308 and 309.

Air is sucked in direction 313 using an underpressure of 200Pa through the sample 301 of the stack, as indicated with arrow 314. The volume of air sucked is measured per minute, and the air permeability is expressed as the volume per minute and per length unit of the diameter of opening 310.

The planar air permeability of stack 10 and of both sides 24a and 24b of stack 20, as described above and shown in FIGURE 1 and 2, is 0.16 liter per minute for a length 310 of 5cm. The planar air permeability thus is 0.032 l/min*cm.

It was found that the porosity of contact layer 13, 23a or 23b does not make significant changes to this planar air permeability.

The perpendicular air permeability of the contact layer 13, 23a and 23b is measured to be 123 l/min*dm$^2$ for a contact layer of 70% porosity.

An electrical resistance may be measured over the stack 10 or over both sides of stack 20, being 9.2 * 10$^{-3}$ Ohm.

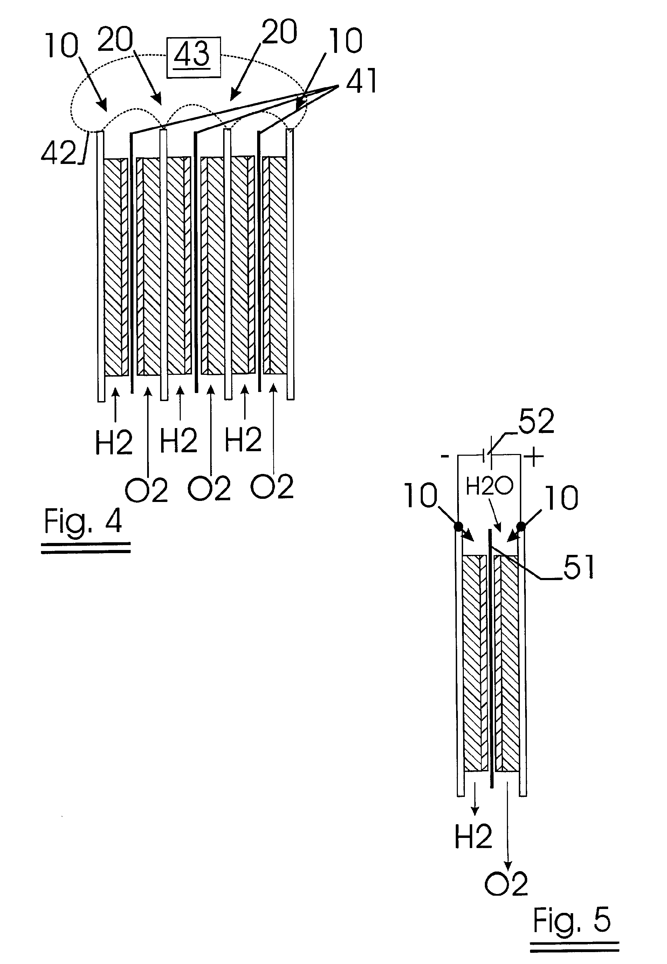

The stacks 10 or 20 as subject of the invention may be used in an electrolyser or in a fuel cell, as shown in Figure 4 and Figure 5.

Figure 4 shows a fuel cell 40, comprising several stacks 10 and 20, separated from each other using proton exchange membranes 41, between the contact layers of the stacks 10 or 20 and the PEM 41, appropriate catalysts are provided.

$O_2$ or $H_2$ is provided to the stack in such a way that at both sides of the PEM, an electrochemical reaction takes place. The e$^-$ are collected through the contact and diffusion layers by the collector layers.

The collector layers are connected to each other via an appropriate electrical connection device 42, which provided electrical current to be used by an electrical device or to a battery 43.

In Figure 5, two stacks 10 are separated from each other by means of a catalytically coated PEM 51.

An electrical tension is provided by a tension source 52 to the collector layers of the electrolyser. $H_2O$ being provided to the electrolyser, reacts electrochemically, providing $O_2$ and $H_2$.

**Claims**

1. A stack comprising an impermeable metal structure, at least one first metal fiber layer and at least one second metal fiber layer, said impermeable metal structure being sintered to one side of said first metal fibers layer, said second metal fibers layer being sintered to the other side of said first metal fibers layer, **characterized in that** the planar air permeability of said stack being more than 0.02 l/min*cm, the porosity of said second metal fiber layer being less than 80%.

2. A stack as in claim 1, said stack comprising two first metal fiber layers and two second metal fiber layers, said first metal fiber layers being sintered each to one side of the impermeable metal structure, said second metal fiber layers being sintered to the other sides of said first metal fiber layers.

3. A stack as in claim 1 or 2, said first metal fiber layers having a porosity of more than 80%

4. A stack as in claim 1 to 3, said second metal fiber layers having a perpendicular air permeability of less than 200 l/min*dm$^2$.

5. A stack as in claim 1 to 4, said first metal fiber layers comprising fibers with equivalent diameter of more than 20μm

6. A stack as in claim 1 to 5, said second metal fibers layers comprising fibers with equivalent diameter of less than 30μm

7. A stack as in claim 1 to 6, said first metal fiber layers having a thickness of more than 0.5mm

8. A stack as in claim 1 to 7, said second metal fiber layers having a thickness of less than 0.2mm

9. A stack as in claim 1 to 8, said stack having a transversal electric resistance less than $30*10^{-3}$ Ohm

10. A stack as in claim 1 to 9, said impermeable metal structure being a metal plate.

11. A stack as in claim 1 to 9, said impermeable metal structure being a metal foil.

12. A stack as in claim 1 to 11, said metal fibers being stainless steel fibers.

13. A stack as in claim 1 to 11, said metal fibers being Ni-fibers or Ni alloy fibers

14. A stack as in claim 1 to 11, said metal fibers being Ti-fibers

15. A stack as in claim 1 to 14, said metal fibers having the same alloy of said impermeable metal structure.

16. A fuel cell, comprising stacks as in claim 1 to 15.

17. An electrolyser, comprising stacks as in claim 1 to 15.

18. The use of a stack as in claim 1 to 15 in fuel cells or electrolysers.

10

13    12

11    Fig. 1

20

23a    22a

24 a {

21

24 b {

23b    22b    Fig. 2

306    301

306    302    306    B'

A    A'

B    312

305    305

304    304    309

303    307

308    Fig. 3a

Fig. 3b

Fig. 3c

Fig. 4

Fig. 5

**European Patent Office**

## EUROPEAN SEARCH REPORT

Application Number

EP 02 07 5170

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 817 297 A (DE NORA SPA) 7 January 1998 (1998-01-07) * claims * * figures * | 1 | B22F7/00 H01M8/02 |
| A | EP 0 629 015 A (PERMELEC SPA NORA) 14 December 1994 (1994-12-14) * claims * * figures * | 1 | |
| A | PATENT ABSTRACTS OF JAPAN vol. 010, no. 214 (C-362), 25 July 1986 (1986-07-25) & JP 61 052383 A (JAPAN STORAGE BATTERY CO LTD), 15 March 1986 (1986-03-15) * abstract * | 1 | |
| D,A | US 6 232 010 B1 (WENG DACONG ET AL) 15 May 2001 (2001-05-15) * figures 6,11,13-15 * * column 3, line 27 - line 64 * * claims * | 1 | |

TECHNICAL FIELDS SEARCHED (Int.Cl.7)

B22F
H01M

The present search report has been drawn up for all claims

| Place of search | Date of completion of the search | Examiner |
|---|---|---|
| THE HAGUE | 11 July 2002 | Riba Vilanova, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 327 492 A1**

## ANNEX TO THE EUROPEAN SEARCH REPORT
## ON EUROPEAN PATENT APPLICATION NO.

EP 02 07 5170

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2002

| Patent document cited in search report | | | Publication date | Patent family member(s) | | | Publication date |
|---|---|---|---|---|---|---|---|
| EP 0817297 | A | | 07-01-1998 | IT | MI961293 | A1 | 29-12-1997 |
| | | | | AU | 725060 | B2 | 05-10-2000 |
| | | | | AU | 2478897 | A | 15-01-1998 |
| | | | | BR | 9703725 | A | 27-10-1998 |
| | | | | CA | 2207425 | A1 | 26-12-1997 |
| | | | | CZ | 9701998 | A3 | 18-03-1998 |
| | | | | EP | 0817297 | A2 | 07-01-1998 |
| | | | | JP | 10055805 | A | 24-02-1998 |
| | | | | NO | 972774 | A | 19-12-1997 |
| | | | | SG | 63718 | A1 | 30-03-1999 |
| | | | | SK | 87097 | A3 | 14-02-2000 |
| | | | | TR | 9700540 | A2 | 21-01-1998 |
| | | | | US | 6022634 | A | 08-02-2000 |
| EP 0629015 | A | | 14-12-1994 | IT | 1270878 | B | 13-05-1997 |
| | | | | AT | 210339 | T | 15-12-2001 |
| | | | | AU | 674931 | B2 | 16-01-1997 |
| | | | | AU | 6054194 | A | 03-11-1994 |
| | | | | BR | 9401641 | A | 22-11-1994 |
| | | | | CA | 2121455 | A1 | 31-10-1994 |
| | | | | CN | 1108005 | A ,B | 06-09-1995 |
| | | | | CZ | 9400986 | A3 | 19-10-1994 |
| | | | | DE | 69429304 | D1 | 17-01-2002 |
| | | | | DK | 629015 | T3 | 02-04-2002 |
| | | | | EP | 0629015 | A1 | 14-12-1994 |
| | | | | FI | 941932 | A | 31-10-1994 |
| | | | | JP | 2953555 | B2 | 27-09-1999 |
| | | | | JP | 6349508 | A | 22-12-1994 |
| | | | | RU | 2126569 | C1 | 20-02-1999 |
| | | | | SK | 50694 | A3 | 09-11-1994 |
| | | | | US | 5482792 | A | 09-01-1996 |
| | | | | US | 5578388 | A | 26-11-1996 |
| | | | | US | 5565072 | A | 15-10-1996 |
| JP 61052383 | A | | 15-03-1986 | NONE | | | |
| US 6232010 | B1 | | 15-05-2001 | AU | 4816500 | A | 21-11-2000 |
| | | | | EP | 1214749 | A2 | 19-06-2002 |
| | | | | WO | 0069003 | A2 | 16-11-2000 |

EPO FORM P0459

For more details about this annex : see Official Journal of the European Patent Office, No. 12/82

11